Europäisches Patentamt

European Patent Office

Office européen des brevets

(11) Veröffentlichungsnummer: **0 005 257**
**B1**

(12) **EUROPÄISCHE PATENTSCHRIFT**

(45) Veröffentlichungstag der Patentschrift:
**14.04.82**

(51) Int. Cl.³: **H 04 Q 7/02**

(21) Anmeldenummer: **79101315.4**

(22) Anmeldetag: **02.05.79**

(54) **Selektivruf-Sprechfunksystem.**

(30) Priorität: **05.05.78 DE 2819644**

(43) Veröffentlichungstag der Anmeldung:
**14.11.79 Patentblatt 79/23**

(45) Bekanntmachung des Hinweises auf die Patenterteilung:
**14.04.82 Patentblatt 82/15**

(84) Benannte Vertragsstaaten:
**AT DE FR IT NL**

(56) Entgegenhaltungen:
**DE-A-2 027 053**
**DE-A-2 703 923**
**DE-B-1 280 352**
**GB-A-1 525 324**
**ELECTRONIQUE & APPLICATIONS INDUSTRIELLES,**
**Nr. 239, 15. Juni 1977, Paris**
**M. HARDY: «Réalisation des systèmes d'appels sélec-**
**tifs», Seiten 42–47**

**IBM TECHNICAL DISCLOSURE BULLETIN Vol. 12. Nr.**
**12, Mai 1970, New York**
**SPARROW et al.: «Radio-controlled emergency notifi-**
**cation device», Seite 2253**

**PATENTS ABSTRACTS OF JAPAN, Vol. 1 Nr. 35, 15.**
**April 1977, Seite 1849E76**

(73) Patentinhaber: **ROBERT BOSCH GMBH, Postfach 50,**
**D-7000 Stuttgart 1 (DE)**

(72) Erfinder: **Dallmann, Horst, Wiersichweg 5,**
**D-1000 Berlin 13 (DE)**
Erfinder: **Wenz, Werner, Krowelstrasse 13 - 15,**
**D-1000 Berlin 20 (DE)**

(74) Vertreter: **Schmidt, Hans-Ekhardt, Robert Bosch GmbH**
**Geschäftsbereich Elektronik Patent- und Lizenzabteilung**
**Forckenbeckstrasse 9-13, D-1000 Berlin 33 (DE)**

## Selektivruf-Sprechfunksystem

Die Erfindung geht aus von einem Selektivruf-Sprechfunksystem nach der Gattung des Hauptanspruchs.

Es ist ein Selektivruf-Sprechfunksystem bekannt (DE-AS 1 243 249), das eine zentrale Funksende- und -empfangsstation und mehrere im Funkbereich der Zentralstation befindliche mobile Funksende- und Empfangsstationen aufweist. Jeder mobilen Station ist je ein Selektivruf bzw. je eine Kennung zugeordnet, die aus einer mehrstelligen Tonfolge besteht. Ein derartiges Selektivruf-Sprechfunksystem reicht aber nicht zur Personensicherung der Bedienungsperson einer mobilen Station aus. Es genügt nicht, wenn die Bedienungsperson die mobile Station, das ist in diesem Fall ein Handsprechfunkgerät, ständig mit sich trägt, um im Gefahrenfall Hilfe herbeirufen zu können, es muss vielmehr von der Zentralstation aus möglich sein, einen Gefahrenfall zu erkennen, auch wenn die Bedienungsperson sich nicht mehr mittels des Handsprechfunkgerätes melden kann.

«Es ist darüber hinaus bekannt (Electronique & Applications Industrielles, Nr. 239, 15. Juni 1977, Seiten 42 bis 47), Selektivrufe mit unterschiedlichen Kriterien oder Adressen zu versehen, die nach ihrer Auswertung unterschiedliche Funktionen bewirken.»

Vorteile der Erfindung

Das Selektivruf-Sprechfunksystem mit den kennzeichnenden Merkmalen des Hauptanspruchs hat demgegenüber den Vorteil, dass die Bedienungspersonen der mobilen Stationen in festen Zeitabständen und sich zyklisch wiederholend aufgerufen werden und dass jedes Ausbleiben eines Quittungsrufs einer mobilen Station das Vorliegen einer Gefahr für die betreffende Bedienungsperson in der Zentralstation anzeigt. Als weiterer Vorteil ist anzusehen, dass bei dem erfindungsgemässen Aufbau von Selektivruf und Aufruf die mobilen Stationen eindeutig unterscheiden können, ob sie einen Selektivruf oder einen Aufruf empfangen.

Durch die in den Unteransprüchen aufgeführten Massnahmen sind vorteilhafte Weiterbildungen und Verbesserungen des im Hauptanspruch angegebenen Selektivruf-Sprechfunksystems möglich. Besonders vorteilhaft ist es, wenn eine in jeder mobilen Station enthaltene Schaltvorrichtung nach dem Erkennen eines Selektivrufs einschliesslich des ersten Kriteriums den NF-Kanal der betreffenden mobilen Station öffnet und der NF-Kanal bei Gesprächsende durch Betätigen einer Löschtaste gesperrt wird, während die Schaltvorrichtung nach dem Erkennen eines Selektivrufs einschliesslich des zweiten Kriteriums den NF-Kanal sperrt und ein Tonsignal für eine kürzere Zeit einschaltet, welches als Aufforderung zur Betätigung einer Quittungstaste dient, durch die der Quittungsruf ausgelöst wird. Damit wird sichergestellt, dass der NF-Kanal der mobilen Stationen nicht durch Aufrufe geöffnet werden kann, wodurch es sonst zu einer Belästigung der Bedienungsperson kommen würde. Die Bedienungsperson wird lediglich durch ein Tonsignal auf den Empfang eines für die betreffende mobile Station bestimmten Aufrufs aufmerksam gemacht und damit zur Abgabe des Quittungsrufs aufgefordert.

Zeichnung

Ausführungsbeispiele für den erfindungsgemässen Aufbau von Selektivrufen, Kennungen und Aufrufen sind anhand mehrerer in der Zeichnung dargestellter Schemata erläutert und nachfolgend beschrieben. Die Zeichnung zeigt in

Fig. 1 ein Schema für einen erfindungsgemässen Selektivruf nach einem ersten Ausführungsbeispiel,

Fig. 2 ein Schema für einen erfindungsgemässen Aufruf nach einem ersten Ausführungsbeispiel,

Fig. 3 ein Schema eines erfindungsgemässen Selektivrufs nach einem zweiten Ausführungsbeispiel,

Fig. 4 ein Schema eines erfindungsgemässen Aufrufs nach einem zweiten Ausführungsbeispiel und

Fig. 5 ein stark vereinfachtes Blockschaltbild einer mobilen Station nach der Erfindung.

Beschreibung der Erfindung

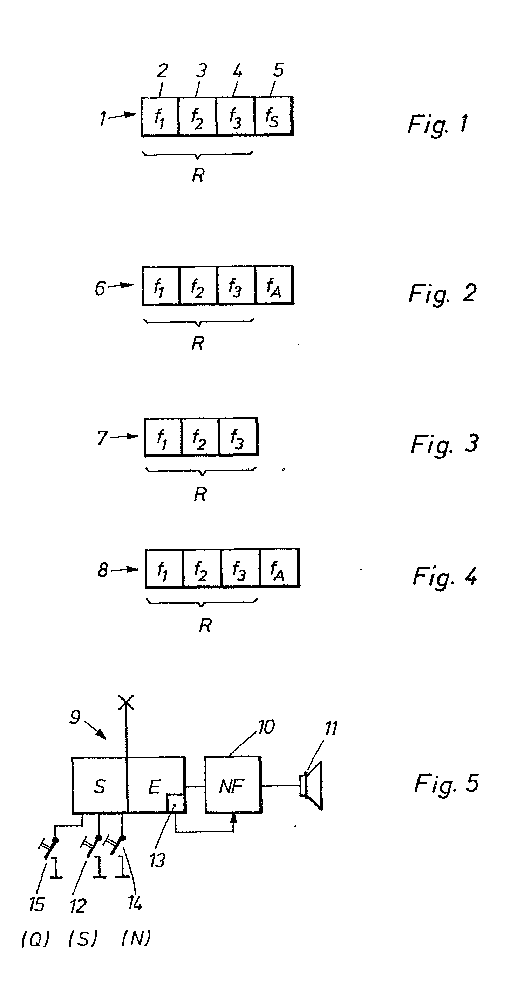

Bei dem erfindungsgemässen Selektivruf-Sprechfunksystem wird der normale Sprechfunkverkehr von einer zentralen Funksende-und -empfangsstation bzw. von den im Funkbereich der Zentralstation befindlichen mobilen Funksende- und -empfangsstationen durch Selektivrufe bzw. Kennungen eingeleitet, die einen in Fig. 1 bzw. Fig. 3 gezeigten Aufbau haben. Nach Fig. 1 umfasst ein Selektivruf 1 bzw. eine Kennung vier Stellen 2 bis 5, von denen jede Stelle durch eine Frequenz von zum Beispiel zwölf verschiedenen Frequenzen $f_1...f_{12}$ belegt ist.

Der Selektivruf beginnt mit einer dreistelligen Rufnummer R, die die betreffende mobile Station kennzeichnet. Die Rufnummer umfasst beispielsweise eine Folge der Frequenzen $f_1$, $f_2$ und $f_3$ entsprechend der Ziffernfolge 1–2–3. An die Rufnummer R schliesst sich die Stelle 5 an, die mit einer besonderen Frequenz $f_S$ belegt ist. Die Frequenz $f_S$ entspricht beispielsweise der elften Frequenz $f_{11}$, durch die der Selektivruf 1 derart gekennzeichnet ist, dass damit der normale Sprechfunkverkehr eingeleitet werden soll.

Einen davon abweichenden Aufbau hat der Aufruf 6 (Fig. 2). Der Aufruf 6 beginnt ebenfalls mit der Rufnummer R, an die sich jedoch eine weitere besondere Frequenz $f_A$ anschliesst, die zum Beispiel durch die zwölfte Frequenz $f_{12}$ dargestellt wird.

Durch diese Art der Unterscheidung von Selektivruf 1 und Aufruf 6 wird sichergestellt, dass die mobilen Stationen Selektivrufe und Aufrufe unterscheiden können. Der Auswerter der mobilen Stationen muss daher so beschaffen sein, dass er die ersten drei Stellen eines Selektivrufs bzw. eines Aufrufs in der üblichen Weise nacheinander auswertet, während seine Selektionsmittel die Frequenzen $f_S$ bzw. $f_A$ der letzten Stelle eines Selektivrufs bzw. eines Aufrufs entweder parallel auswerten oder innerhalb der Zeit des Empfangs der Frequenz $f_S$ oder $f_A$ von der einen Frequenz auf die andere Frequenz umgeschaltet werden.

Die zentrale Station sendet die für die einzelnen mobilen Stationen bestimmten Aufrufe nacheinander und sich zyklisch wiederholend aus und löst dabei in den mobilen Stationen ein Tonsignal aus, das die Bedienungsperson auf einen für sie bestimmten Aufruf aufmerksam macht. Innerhalb einer bestimmten Zeit muss die Bedienungsperson dann den Aufruf durch einen Quittungsruf bestätigen. Die bestimmte Zeit erstreckt sich beispielsweise über zwei Aufruf-Zyklen, das heisst die Bedienungsperson muss spätestens nach dem zweiten Tonsignal einen Quittungsruf auslösen, da sonst in der zentralen Station automatisch ein optisches und/oder akustisches Alarmsignal ausgelöst wird, das die betreffende mobile Station kennzeichnet und auf den Gefahrenfall aufmerksam macht.

Eine Alternative zur Unterscheidung von Selektivrufen und Aufrufen bilden der Selektivruf 7 (Fig. 3) und der Aufruf 8 in Fig. 4. Danach unterscheiden sich Selektivruf und Aufruf durch die Stellenzahl der Tonfolge. Während der Selektivruf 7 dreistellig ist, ist der Aufruf 8 durch eine vierte Stelle, die mit der Frequenz $f_A$ belegt ist, ergänzt. Mobile Stationen 9, das sind zum Beispiel Handsprechfunkgeräte, sind gewöhnlich so eingerichtet, dass sie bei einem als richtig erkannten Selektivruf ihren NF-Kanal 10 öffnen, wodurch ihr Lautsprecher 11 wirksam wird. Der NF-Kanal 10 wird auch geöffnet, wenn die Sendetaste 12 der mobilen Station durch die Bedienungsperson betätigt wird. Damit der NF-Kanal der mobilen Station nicht auch durch einen Aufruf geöffnet wird, enthält der Empfangsteil der mobilen Station eine Schaltvorrichtung 13, die beim Erkennen eines Selektivrufs 1, 7 den NF-Kanal öffnet und beim Erkennen eines Aufrufs 6, 8 sperrt. Um den Aufruf für die Bedienungsperson erkennbar zu machen, wird durch die Schaltvorrichtung das bereits oben erwähnte Tonsignal für eine kürzere Zeit eingeschaltet.

Damit sich die Bedienungsperson in einem Notfall unabhängig von dem Aufruf-Zyklus bei der Zentralstation melden kann, hat jede mobile Station eine Notruftaste 14. Beim Betätigen der Notruftaste wird ein Notruf ausgelöst, der aus der Kennung der betreffenden mobilen Station und einem zusätzlichen Notrufkriterium besteht. In der Zentralstation wird ein erkannter Notruf optisch und/oder akustisch angezeigt. Eine zusätzliche Sicherheit bietet bei tragbaren Stationen, das heisst bei Handsprechfunkgeräten, das automatische Aussenden eines Notrufs, wenn das Gerät für längere Zeit, zum Beispiel für mehr als 3 bis 5 Sekunden, sich in einer Lage befindet, die von der senkrechten Betriebslage des Gerätes um mehr als etwa 60° abweicht. Ist beispielsweise die Bedienungsperson derart stark gestürzt, dass sie nicht in der Lage ist, die Notruftaste zu betätigen, dann sendet die betreffende mobile Station automatisch nach einigen Sekunden einen Notruf aus.

Die nach dem Empfang eines Aufrufs von der Bedienungsperson zu betätigende Quittungstaste 15 der mobilen Stationen ist vorzugsweise derart elektronisch verriegelt, dass sie nur dann einen Quittungsruf aussendet, wenn die betreffende mobile Station ihren Aufruf erkannt hat. Auf diese Weise wird verhindert, dass bei der Zentralstation eintreffende Quittungsrufe fälschlicherweise eine Notfall-Situation unerkannt lassen. Eine weitere Verbesserung ist möglich, wenn die Quittungstasten nur innerhalb eines bestimmten Zeitraums eines jeden Aufruf-Zyklus einen Quittungsruf auslösen können.

Die Zeit zwischen zwei aufeinanderfolgenden Aufruf-Zyklen beträgt vorzugsweise mehrere Minuten und hängt von der Zahl der mobilen Stationen ab.

**Patentansprüche**

1. Selektivruf-Sprechfunksystem mit einer zentralen Funksende- und -empfangsstation und mit mehreren im Funkbereich der Zentralstation befindlichen mobilen Funksende- und -empfangsstationen, denen je ein Selektivruf bzw. je eine Kennung zugeordnet ist, wobei die Selektivrufe unterschiedliche Kriterien oder Adressen zur Durchführung unterschiedlicher Funktionen enthalten, dadurch gekennzeichnet, dass der normale Sprechfunkverkehr von der Zentralstation bzw. von den mobilen Stationen durch Selektivrufe (1) bzw. Kennungen eingeleitet wird, die ein allen Funkteilnehmern gemeinsames erstes Kriterium aufweisen, und dass zwecks Überwachung der die mobilen Stationen bedienenden Personen von der Zentralstation aus nacheinander und sich zyklisch wiederholend an die einzelnen mobilen Stationen Aufrufe (6) in Form von Selektivrufen ausgesendet werden, die ein für alle mobilen Stationen gemeinsames zweites Kriterium aufweisen, dass jeder von einer mobilen Station erkannte Aufruf durch einen von der Bedienungsperson der betreffenden mobilen Station innerhalb einer bestimmten Zeit ausgelösten und an die Zentralstation übermittelten Quittungsruf (= Kennung) quittiert wird und dass in der Zentralstation beim Ausbleiben eines erwarteten Quittungsrufs automatisch nach Ablauf der bestimmten Zeit ein die betreffende mobile Station kennzeichnendes optisches und/ oder akustisches Alarmsignal ausgelöst wird.

2. Selektivruf-Sprechfunksystem nach Anspruch 1, dadurch gekennzeichnet, dass für die Einleitung des normalen Sprechfunkverkehrs ein n-stelliger Selektivruf (1) bzw. eine n-stellige Kennung vorgesehen sind, die beide durch eine zusätzliche Stelle mit dem ersten Kriterium ergänzt sind, während für die Aufrufe (6) n-stellige Selektivrufe vorgesehen sind, die durch eine zusätzliche Stelle mit dem zweiten Kriterium ergänzt sind.

3. Selektivruf-Sprechfunksystem nach Anspruch 1, dadurch gekennzeichnet, dass ein zur Einleitung des normalen Sprechfunkverkehrs dienender n-stelliger Selektivruf (7) bzw. eine n-stellige Kennung dem ersten Kriterium entspricht und für die Aufrufe (8) ein (n + 1)-stelliger Selektivruf vorgesehen ist, dessen eine Stelle das zweite Kriterium aufweist.

4. Selektivruf-Sprechfunksystem nach einem der Ansprüche 1 bis 3, dadurch gekennzeichnet, dass eine in jeder mobilen Station enthaltene Schaltvorrichtung (13) nach dem Erkennen eines Selektivrufs einschliesslich des ersten Kriteriums den NF-Kanal (10) der mobilen Station öffnet, dass der NF-Kanal bei Gesprächsende durch Betätigen einer Löschtaste gesperrt wird, während die Schaltvorrichtung nach dem Erkennen eines Selektivrufs einschliesslich des zweiten Kriteriums den NF-Kanal sperrt und ein Tonsignal für eine kürzere Zeit einschaltet, welches als Aufforderung zur Betätigung einer Quittungstaste (15) dient, durch die der Quittungsruf ausgelöst wird.

5. Selektivruf-Sprechfunksystem nach einem der Ansprüche 1 bis 4, dadurch gekennzeichnet, dass die mobilen Stationen mit einer Notruftaste (14) ausgerüstet sind, die beim Betätigen einen aus der Kennung der betreffenden mobilen Station und einem zusätzlichen Notrufkriterium bestehenden Notruf auslöst, und dass ein von der Zentralstation erkannter Notruf optisch und/oder akustisch angezeigt wird.

6. Selektivruf-Sprechfunksystem nach Anspruch 1 oder 5, dadurch gekennzeichnet, dass bei Verwendung von tragbaren Funksende- und -empfangsgeräten automatisch ein Notruf ausgesendet wird, wenn das tragbare Gerät für längere Zeit, zum Beispiel für mehr als 3...5 s, in eine Lage gebracht wird, die um mehr als etwa 60° von der senkrechten Betriebslage des Gerätes abweicht.

7. Selektivruf-Sprechfunksystem nach Anspruch 1 oder 4, dadurch gekennzeichnet, dass die Quittungstaste (15) der mobilen Stationen derart elektronisch verriegelt ist, dass ein Quittungsruf nur dann ausgesendet werden kann, wenn die betreffende Station ihren Aufruf erkannt hat.

8. Selektivruf-Sprechfunksystem nach einem der Ansprüche 1 bis 6, dadurch gekennzeichnet, dass die mobilen Stationen beim Betätigen ihrer Sendetaste (12) automatisch ihre Kennung aussenden und ihren NF-Kanal (10) öffnen, während beim Betätigen der Quittungstaste (15) ebenfalls die Kennung automatisch ausgesendet, der NF-Kanal jedoch gesperrt wird.

9. Selektivruf-Sprechfunksystem nach Anspruch 1, 4 oder 6, dadurch gekennzeichnet, dass die Quittungstasten der mobilen Stationen derart beschaffen sind, dass sie bei einer Betätigung nur innerhalb der bestimmten Zeit eines jeden Aufruf-Zyklus einen Quittungsruf auslösen können.

10. Selektivruf-Sprechfunksystem nach einem der Ansprüche 1 bis 9, dadurch gekennzeichnet, dass Selektivrufe und Kennungen Mehrtonfolgen sind.

**Claims**

1. A selective call radiotelephony system having a central radio transmitting and receiving station and a plurality of mobile radio transmitting and receiving stations located within radio range of the central station, each radio transmitting and receiving station having an associated selective call or identification, the selective calls containing different criteria or addresses for performing different functions, characterized in that normal radio telephone traffic from the central station or from the mobile stations is initiated by selective calls (1) or identifications having a first criterion common to all the radio subscribers, and that calls (6) in the form of selective calls, which have a second criterion common to all the portable stations, are transmitted successively and cyclically repetitively from the central station to the individual mobile stations for the purpose of monitoring the persons operating the mobile stations, that each call identified by a mobile station is acknowledged by an acknowledgment call (= identification) which is initiated within a predetermined period of time by the person operating the relevant mobile station and is transmitted to the central station, and that, in the event of an anticipated acknowledgment call failing to arrive, an optical and/or acoustic alarm signal identifying the relevant mobile station is automatically triggered in the central station after the predetermined period of time has expired.

2. A selective call radiotelephony system as claimed in claim 1, characterized in that an n-digit selective call (1) or an n-digit identification are provided for initiating the normal radiotelephone traffic and are both supplemented by an additional digit having the first criterion, while n-digit selective calls are provided for the calls (6) and are supplemented by an additional digit having the second criterion.

3. A selective call radiotelephony system as claimed in claim 1, characterized in that an n-digit selective call (7) or an n-digit identification serving to initiate the normal radio relephone traffic corresponds to the first criterion, and an (n + 1)-digit selective call is provided for the calls (8) and one of its digits has the second criterion.

4. A selective call radiotelephony system as claimed in one of the claims 1 to 3, characterized in that a switching device (13) contained in each mobile station opens the LF channel (10) of the mobile station after a selective call, including the first criterion, has been identified, that the LF channel is closed during transmission of a call by actuating a cancel button, while the switching device closes the LF channel after a selective call including the second criterion has been identified, and initiates, for a short period of time, an audio signal which serves as a request to actuate an acknowledgment button (15) by which the acknowledgment call is initiated.

5. A selective call radiotelephony system as claimed in one of the claims 1 to 4, characterized in that the mobile stations are equipped with an emergency call button (14) which, when actuated, initiates an emergency call consisting of the identification of the relevant mobile station and an additional emergency call criterion, and that an emergency call detected by the central station is indicated optically and/or acoustically.

6. A selective call radiotelephony system as claimed in claim 1 or 5, characterized in that, when using portable radio transmitters and receivers, an emergency call is automatically transmitted if the portable apparatus is brought into a position which differs by more than 60° from the vertical operating position of the apparatus for a long period of time, such as for a period of time in excess of 3 to 5 seconds.

7. A selective call radiotelephony system as claimed in claim 1 or 4, characterized in that the acknowledgment button (15) of the mobile stations is electronically locked such that an acknowledgment call can only by transmitted when the relevant station has identified its call.

8. A selective call radiotelephony system as claimed in one of the claims 1 to 6, characterized in that the mobile stations automatically transmit their identification and open their LF channel (10) when their transmitting button (12) is actuated, while the identification is likewise automatically transmitted, although the LF channel is closed, when the acknowledgment button (15) is actuated.

9. A selective call radiotelephony system as claimed in claim 1, 4 or 6, characterized in that the acknowledgment buttons of the mobile stations are such that, when actuated, they can only initiate an acknowledgment call within the predetermined time of a respective call cycle.

10. A selective call radiotelephony system as claimed in one of the claims 1 to 9, characterized in that selective calls and identifications are multitone sequences.

**Revendications**

1. Système d'appel sélectif et de radiophonie avec une station centrale d'émission et de réception radio et avec plusieurs stations mobiles d'émission et de réception, se trouvant dans la zone d'émission de la station centrale, et à chacune desquelles est associé un appel sélectif ou bien une identification, les appels sélectifs comportant différents critères ou adresses pour l'accomplissement de différentes fonctions, système caractérisé en ce que le trafic radiophonique normal est entamé à partir de la station centrale ou bien à partir des stations mobiles par des appels sélectifs (1) ou bien des identifications, qui comportent un premier critère commun à tous les abonnés et que, pour permettre la surveillance à partir de la station centrale du personnel desservant des stations mobiles, des appels de surveillance (6) sous forme d'appels sélectifs sont envoyé successivement et en se répétant cycliquement aux différentes stations mobiles, ces appels comportant un second critère commun pour toutes les stations mobiles, tandis qu'il est accusé réception de chaque appel de surveillance détecté par une station mobile, par un appel d'accusé de réception (= identification) déclenché dans un délai déterminé par le personnel de service de la station mobile concernée et transmis à la station centrale, et que dans la station centrale, en cas d'absence d'un appel d'accusé de réception attendu, il est déclenché automatiquement après l'écoulement du délai déterminé un signal d'alarme optique et/ou acoustique caractérisant la station mobile concernée.

2. Sytème d'appel sélectif et de radiophonie selon la revendication 1, caractérisé en ce que, pour entamer le trafic radiophonique normal, il est prévu un appel sélectif (1) à n positions ou bien une identification à n positions; qui sont tous les deux complétés par une position supplémentaire avec le premier critère, tandis qu'il est prévu pour les appels de surveillance (6) des appels sélectifs à n positions qui sont complétés par une position supplémentaire avec le second critère.

3. Système d'appel sélectif et de radiophonie selon la revendication 1, caractérisé en ce qu'un appel sélectif (7) à n positions ou bien une identification à n positions servant à entamer le trafic radiophonique normal, correspond au premier critère, tandis que pour les appels de surveillance (8) il est prévu un appel sélectif à (n + 1) positions, dont une position comporte le second critère.

4. Système d'appel sélectif et de radiophonie selon l'une des revendications 1 à 3, caractérisé en ce qu'un dispositif de commutation (13) contenu dans chacune des stations mobiles ouvre, après une identification d'un appel sélectif comprenant le premier critère, le canal NF (10) de la station mobile, tandis que ce canal NF est fermé à la fin de la communication par l'actionnement d'une touche d'extinction, cependant que le dispositif de commutation, après l'identification d'un appel sélectif comprenant le second critère, ferme le canal NF et enclenche pour un court délai un signal sonore, servant d'invitation à actionner une touche d'accusé de réception (15) grâce à laquelle l'appel d'accusé de réception est déclenché.

5. Système d'appel sélectif et de radiophonie selon l'une des revendications 1 à 4, caractérisé en ce que les stations mobiles sont équipées d'une touche d'appel d'urgence (14) qui, lorsqu'elle est actionnée, déclenche un appel d'urgence constitué de l'identification de la station mobile concernée et d'un critère supplémentaire d'appel d'urgence, tandis qu'un appel d'urgence détecté par la station centrale est annoncé optiquement et/ou acoustiquement.

6. Système d'appel sélectif et de radiophonie selon la revendication 1 ou 5, caractérisé en ce que, en cas d'utilisation d'appareils portatifs d'émission et de réception radio, un appel d'urgence est automatiquement émis lorsque l'appareil portatif est amené pour un temps très long, par exemple pour plus de 3 à 5 secondes, dans une position s'écartant de plus d'environ 60° de la position verticale d'utilisation de l'appareil.

7. Système d'appel sélectif et de radiophonie selon la revendication 1 ou 4, caractérisé en ce que la touche d'accusé de réception (15) des stations mobiles est verrouillée électroniquement de façon telle qu'un appel d'accusé de réception ne peut alors être émis que lorsque la station concernée a détecté son appel de surveillance.

8. Système d'appel sélectif et de radiophonie selon l'une des revendications 1 à 6, caractérisé en ce que les stations mobiles, lors de l'actionnement de leur touche d'émission (12) émettent automatiquement leur identification et ouvrent leur canal NF (10), tandis que lors de l'actionnement de la touche d'accusé de réception (15) l'identification est également envoyée automatiquement mais le canal NF est fermé.

9. Système d'appel sélectif et de radiophonie selon la revendication 1, 4 ou 6, caractérisé en ce que les touches d'accusé de réception des stations mobiles sont constituées de telle sorte qu'elles ne peuvent déclencher un appel d'accusé de réception qu'au cas seulement où elles sont actionnées à l'intérieur du délai déterminé d'un cycle respectif d'appel de surveillance.

10. Système d'appel sélectif et de radiophonie selon l'une des revendications 1 à 9, caractérisé en ce que les appels sélectifs et les identifications sont des successions de plusieurs tonalités.

1/1

$f_1$ | $f_2$ | $f_3$ | $f_S$

*Fig. 1*

$f_1$ | $f_2$ | $f_3$ | $f_A$

*Fig. 2*

$f_1$ | $f_2$ | $f_3$

*Fig. 3*

$f_1$ | $f_2$ | $f_3$ | $f_A$

*Fig. 4*

*Fig. 5*

(Q) (S) (N)